(19) Europäisches Patentamt / European Patent Office / Office européen des brevets

(11) **EP 3 582 447 A1**

(12) **EUROPEAN PATENT APPLICATION**

(43) Date of publication:
**18.12.2019 Bulletin 2019/51**

(51) Int Cl.:
**H04L 12/40** *(2006.01)*

(21) Application number: **18178073.5**

(22) Date of filing: **15.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Technische Hochschule Ingolstadt**
**85049 Ingolstadt (DE)**

(72) Inventors:
• **Hof, Hans-Joachim**
**85049 Ingolstadt (DE)**
• **Huber, Werner**
**85609 Aschheim (DE)**

(74) Representative: **Lucke, Andreas**
**Boehmert & Boehmert**
**Anwaltspartnerschaft mbB**
**Pettenkoferstrasse 22**
**80336 München (DE)**

(54) **OBFUSCATION OF FRAMES IN A CONTROL AREA NETWORK OF A VEHICLE**

(57) A method and a system for obfuscating frames in a control area network, CAN, of a vehicle, wherein each frame comprises at least one identifier for characterising a priority of the frame, by generating a seed value, obtaining a first ordered set of identifiers of frames usable in the CAN, randomly generating a second ordered set of obfuscated identifiers using the seed value, wherein the total number of obfuscated identifiers in the second ordered set corresponds to the total number of identifiers in the first ordered set, and associating each obfuscated identifier of the second ordered set with an identifier of the first ordered set, wherein an ordering of the obfuscated identifiers of the second ordered set corresponds to an ordering of the identifiers of the first ordered set.

Fig. 3

**Description**

FIELD OF THE INVENTION

The present invention is in the field of vehicle communication security. In particular, the present invention concerns a method, a system, and a storage device for obfuscating frames transmitted over buses of a control area network.

BACKGROUND OF THE INVENTION

Control area network (CAN) buses are used in the automobile industry for providing communication between mutually connected control devices of a vehicle. The communication is based on the transmission of so-called frames, which are data units that contain information or instructions exchangeable between different control units of the vehicle connected to the CAN. The frames transmitted in the CAN comprise an identifier that describes properties of the information transmitted with the frame, like its content, a control device of origin and/or destination, or its priority. The identifier may hence be used for resolving collision situations, in which two or more control units connected with the CAN try to simultaneously transmit a frame or when a control unit must choose which frame to prioritise. The collision is then resolved by letting frames whose identifiers indicate a higher priority be processed before frames whose identifiers indicate a lower priority.

The identifiers and the way in which data is encoded in the frames, i.e. the so-called "CAN-profile", is typically defined differently for vehicles of different vehicle manufacturers or for different vehicle models of a given manufacturer. For safety reasons, the CAN-profile of the vehicle is not made freely available in order to prevent unauthorised access to communications between the control units of the vehicle. Therefore, an unauthorised access or an attack to the communication systems of a vehicle requires first obtaining the CAN-profile used for transmitting the frames between the control units of the vehicle. Since a frame format or CAN-profile is typically shared by different vehicles of a given manufacturer or model series, an unauthorised access to the CAN-profile of one of the vehicles may open the door to subsequent unauthorised accesses to the communication systems of all vehicles sharing the same CAN-profile.

Usually, all control devices of a vehicle connected through the CAN are indistinguishably connected to each other irrespectively of their functionality, so that every frame transmitted in the CAN may be received by each of the control devices. Thus, it may be possible for attackers to obtain information about the CAN profile by connecting a single eavesdropping component to the CAN. In order to avoid this, methods have been developed for providing communication safety for frames transmitted in the control area network of a vehicle in order to impede unauthorised access thereto.

A known technique for providing communication security relies on the use of encryption for encrypting the frames transmitted through the CAN so that the content thereof can only be accessed by authorised components having knowledge of the corresponding encryption keys. However, methods based on encryption typically require a large amount of computational power and processing time and require additional components and resources for key administration and storage. In any case, the limited resources of a CAN are usually unable to support advanced cryptographic techniques. A method for providing communication security based on the use of encryption is known from DE 10 2011 016 106 A1.

Other known techniques for providing communication safety for frames transmitted in a CAN of a vehicle are based on the use of additional equipment components that control a set of rules or protocols for transmitting the frames. For example, a periodicity or a maximum number of frame transmissions per unit of time can be determined and applied to the transmission of the frames. Such a method is described in WO 2017/064001 A1.

The aforesaid known techniques have the disadvantage of considerably reducing the speed of communication of the CAN while notably increasing the complexity thereof. However, it is of uppermost importance to preserve a speed of communication suitable for the operation of safety critical components of the vehicle like the brakes, accident assistance means, and the like. Further, in an age in which interconnectability and vehicle automatization is advancing exponentially, it is necessary to provide for secure communication. Therefore, there is room for technical improvement in the field of communication security for frames transmitted through control area network buses of a vehicle.

SUMMARY OF THE INVENTION

It is a purpose of the present invention to provide simpler and more time efficient communication security for frames transmitted through control area network buses of a vehicle. This problem is solved by a method according to claim 1, a system according to claim 7, and a storage device according to claim 15. Preferable embodiments of the invention are defined in the dependent claims.

A first aspect of the invention relates to a method for obfuscating frames transmitted in a control area network (CAN) of a vehicle. A "frame" refers herein to any kind of digitalised unit of information that may be transmitted through a CAN, and may in particular refer to a so-called data frame or telegram or to a part thereof.

Each frame comprises at least one identifier that identifies the frame for communication purposes. The identifier of a frame may characterise a control unit of origin or destination, describe the content of the frame, and/or be indicative of a priority of the frame. A priority of the frame may refer to the relative order in which frames are transmitted over of the CAN network or processed by a control unit of the vehicle. For example, it may be determined from the identifiers of a first frame and a second frame that the first frame has a higher priority than the second frame and must hence be transmitted over a CAN bus or must be processed by a given control unit before the second frame.

The identifier may correspond to a portion of a frame having a predefined length in bits or bytes. In the case of frames used for the purpose of establishing a workflow of priority, like so-called "remote frames", a frame may consist of an identifier only. Potentially colliding control units connected to the CAN may successively send their respective identifiers, i.e. remote frames, through the CAN and await an output of the transmission. If the transmission of an identifier is successful, the corresponding control unit of origin of that identifier or remote frame knows that its corresponding frame has higher priority and may proceed to transmit a frame, while the control unit whose identifier is not successfully transmitted knows it has to wait. In other words, the successful control unit has the higher priority. Since a transmitted "0" overrides a "1", lower numeric values may be used for representing higher priorities.

The method of the invention comprises a step of generating a seed value. The seed value may correspond to a sequence of bits or bytes of a predefined length. The step of generating the seed value may be combined with other configuration processes such as a setting of the system time. "Generating a seed value", as understood herein, may comprise a process of creating a previously non-existing value, but may also comprise a process of obtaining a previously existing value, for instance a value stored in the vehicle or in an external component.

The method further comprises a step of obtaining a first ordered set of identifiers of frames usable in the CAN. The first ordered set of identifiers may comprise identifiers of all frames usable in the CAN or only of some of them. The first ordered set of identifiers may be chosen among all frames usable in the CAN with respect to a particular group of control units origin or destination of the respective frames, functionality, or any other selection criterion. For instance, if frames are foreseen in the CAN regarding a braking function, an illuminating function, and a door-locking function, the first ordered set of identifiers may correspond to frames related to the illuminating function and the door-locking function only, while frames related to the braking function are not obfuscated. However, obfuscation may as well be applied to all frames irrespectively of their functionality.

The method further comprises a step of randomly generating a second ordered set of obfuscated identifiers using the seed value. The total number of obfuscated identifiers in the second ordered set corresponds to the total number of identifiers in the first ordered set, so that the first and the second ordered set of identifiers have the same number of components. The obfuscated identifiers of the second ordered set may be randomly generated by means of a random number generating algorithm. The second ordered set may correspond to a sequence of obfuscated identifiers randomly generated by means of a deterministic random number generating algorithm, so that a particular set of identifiers is obtained for a particular seed value, and is hence reproducible by using the seed value.

The method further comprises a step of associating each obfuscated identifier of the second ordered set with an identifier of the first ordered set. An ordering of the obfuscated identifiers of the second ordered set corresponds to an ordering of the identifiers of the first ordered set. Thus, each of the obfuscated identifiers of the second ordered set may be uniquely related to an identifier of the first ordered set, so that a one-to-one map may be established between the first ordered set and the second ordered set, wherein the one-to-one map reproduces, for the obfuscated identifiers of the second ordered set, the priority relation between the identifiers of the first ordered set. The step of associating may comprise configuring control units of the vehicle connected to the CAN so that the control units know how to interpret the obfuscated identifiers with respect to the original identifiers and/or communicating to the aforesaid control units one or more obfuscated identifiers replacing corresponding identifiers in the task of indicating that a frame is aimed at a particular control unit. The replaced (non-obfuscated) identifiers may hence no longer be indicative of a frame aimed at that particular control unit such that the corresponding values become free and may be used by respective obfuscated identifiers.

In an example, first to third different obfuscated identifiers of the second ordered set may be respectively associated with first to third different identifiers of the first ordered set. An ordering of the first to third identifiers may be given by respective bit values reflecting a priority according to corresponding numerical values. For instance, the first identifier may have higher priority than the second identifier and the second identifier may have higher priority than the third identifier. Accordingly, a numerical value corresponding to the first identifier may be smaller than a numerical value corresponding to the second identifier, and a numerical value corresponding to the second identifier may be smaller than a numerical value corresponding to the third identifier. In that exemplary case, the first to third obfuscated identifiers are such that a priority of the first obfuscated identifier is higher than a priority of the second obfuscated identifier and a priority of the second obfuscated identifier is higher than a priority of the third obfuscated identifier. Thus, a numerical value corresponding to the first obfuscated identifier may be smaller than a numerical value corresponding to the second obfuscated identifier, and a numerical value corresponding to the second obfuscated identifier may be smaller than a numerical value corresponding to the third obfuscated identifier. This may apply irrespectively of the particular mapping resulting for the numerical values, i.e.

irrespectively of which numerical values of obfuscated identifiers of the second ordered set are associated with which numerical values of identifiers of the first ordered set. The only relevant condition is that the obfuscated identifiers should keep the same priority relations, i.e. the same ordering, as the original identifiers.

The method of the invention provides for a simplified manner of providing secure communication for frames transmitted in a CAN of a vehicle by means of obfuscation without requiring complex and resource-consuming processes and without compromising the limited bandwidth available for data transmission in a CAN. Further, the method of the invention does not require the use of dedicated system components and resources like dedicated key storage, key transmission, or key management components and resources. Instead, the seed value of the method of the invention needs only be generated once and provides for time persistent communications security without necessarily requiring subsequent actualisations or changes, i.e. the method of the invention can easily be implemented by adapting existing production processes of a vehicle.

In addition, since the seed value is generated individually for a particular vehicle, obfuscated identifiers of the second set are associated with identifiers of the first set in a way that is characteristic of a particular vehicle. Therefore, an attack or unauthorised access to the CAN requires direct access to the individual vehicle. Further, even if an attack against the CAN of one vehicle were successful, the information obtained during the attack could not be used for extending the attack to further vehicles, since the obfuscation, and hence the CAN profile obtained by means of the method of the present invention is characteristic of each individual vehicle.

The method of the present invention may be software implemented and/or hardware implemented and may be performed during an initialising or manufacturing phase of the vehicle or when carrying out subsequent maintenance tasks. Further, the method of the invention may be repeated in time, including generating, saving, and/or subsequently erasing new seed values and, in order to further increase the degree of randomization and hence the security level. For example, the method of the invention may be repeated in irregular or random time periods. In some embodiments, each repetition of the method may be triggered by an action by a user of the vehicle, like e.g., starting the engine, unlocking or locking the vehicle and the like.

According to a preferred embodiment of the invention, generating the seed value may comprise generating a random seed value. The use of a random value as a seed value provides for a higher degree of security. Additionally or alternatively, generating the seed value may comprise obtaining a reference value stored in the vehicle or in an external component. The reference value may for example correspond to a model block number or a chassis number of the vehicle or the like. The seed value may also be generated using a combination of a randomly generated seed value and an obtained reference value. For example, a reference value may be obtained and used to create a randomly generated seed value by means of a deterministic random number generating algorithm.

In preferred embodiments of the invention, the seed value may comprise at least 64 bits, preferably at least 128 bits, more preferably at least 256 bits.

According to a preferred embodiment of the invention, the method may further comprise a step of saving the seed value into a storage means. This may allow recovering the seed value if necessary, for instance, for installing replacement components of the vehicle and integrating them in the CAN. The storage means may be an internal storage means located within the vehicle or an external storage means not belonging to the vehicle. For example, car manufacturers may store and safely guard an individual seed value corresponding to a particular vehicle in an external storage means to which only authorised persons have limited access when required for maintenance purposes or for any other purposes relevant for the vehicle, like e.g., ownership changes. External storage of the seed value may further allow configuring additional vehicle components or replacement components incorporated into the vehicle and connected to the CAN by adapting them to the individual CAN profile of the vehicle, i.e. by configuring the new components to operate with obfuscated identifiers and permuted data parts of frames obfuscated according to the method of the present invention using the seed value stored in the storage means.

The seed value may be stored digitally or by any other means. For instance, the seed value may be printed in a secure location, like a hidden part of the vehicle or a paper document guarded by the manufacturer or the owner of the vehicle, so that physical access to the storage means is required for obtaining the seed value.

Each identifier and each obfuscated identifier may comprise a number of bits N. In preferred embodiments of the invention, the method may further comprise increasing the number of bits N if a difference between $2^N$ and the number of identifiers in the first ordered set is smaller than a first predefined threshold. This may prevent a small degree of randomisation from compromising the security provided by the method of the invention. If each identifier and each obfuscated identifier comprises N bits, there may be up to $2^N$ different identifiers or obfuscated identifiers. If a difference between $2^N$ and the number of identifiers of the first ordered set, i.e. the number of frames to which the method of the invention is applied, is too small, the degree of randomisation may be too small to guarantee the security of the method. This can be avoided by increasing the number of bits N of each identifier and each obfuscated identifier when such a situation is detected. The first predefined threshold may be chosen such that a defined minimum degree of randomisation be achieved, the degree of randomisation being related in this case to the difference between $2^N$ and the number of identifiers in the first ordered set.

For example, if a so-called standard frame format is being used in which each identifier comprises 11 bits, the CAN supports 2048 different numerical values that may correspond to an identifier. The method may comprise switching into a so-called extended frame format in which each identifier comprises 29 bits when a difference between 2048 and the number of identifiers in the first ordered set is smaller than a first predefined threshold, for example, when the number of identifiers in the first ordered set exceeds 1000, so that the CAN now supports 536870912 different numerical values instead of the original 2048. The degree of randomization and hence of security can thereby be notably increased.

According to preferred embodiments of the invention, the method may further comprise generating a random permutation of bits or groups of bits of a data part of at least one of said frames using the seed value. The data part of the frame contains information encoded in said bits or groups of bits readable by a component of the vehicle connected to the CAN. Unlike the identifiers, data parts may be fully randomised for obfuscation without the need of keeping track of any ordering. The random permutation of said bits or groups of bits may be generated using a deterministic random number generating algorithm, so that a particular permutation be dependent on a particular seed value, so that it is possible to reproduce each random permutation using the corresponding seed value.

In further preferred embodiments of the invention, the random permutation of the bits or group of bits of said data part is generated using the seed value and the obfuscated identifier of said at least one frame. In that case, the corresponding seed value and the corresponding obfuscated identifier are both needed for reproducing the generated random permutation.

The control units connected to the CAN may then be correspondingly configured to know how to read the permuted data parts. For that purpose, when the data part of a frame is permuted, an order in which the bits or groups of bits of the permuted data part should be read can be communicated to the control unit at which the aforesaid frame is aimed and/or the aforesaid control unit can be adapted accordingly. Consequently, each control unit in the CAN "knows" what frames are aimed at it and how to correctly read them. Thus, even an intruder device that obtained unauthorised access to the CAN could, at most, decode or read only incoming frames after finding out the corresponding permutations and obfuscated identifiers but could still not send frames to other control units connected with the CAN, since the intruder device would lack knowledge of the obfuscated identifiers corresponding to the remaining control units and of the different permutations applied thereto.

"The at least one frame" having a permuted data part may correspond to any of the frames for which obfuscated identifiers are generated, and may in particular correspond to all frames for which obfuscated identifiers are generated.

The aforesaid groups of bits of the data part may correspond to bytes, in which case the method may comprise generating a random permutation of bytes of the data part.

The bits or groups of bits of the data part of the at least one frame may comprise a number of bits or of group of bits M. In preferred embodiments of the invention, the method may further comprise increasing the number M by adding further bits or groups of bits, e.g. "dummy bytes", to the data part of said at least one frame if the number M is smaller than a second predefined threshold. This allows guaranteeing an appropriate degree of randomization in a similar manner as for the identifiers, as explained above.

According to preferred embodiments of the invention, the method may further comprise erasing the seed value after using the seed value. This has the advantage that the seed value is not present in the system. Thus, in case an unauthorised access to the system or attack against the system is attempted, there is no possibility of directly obtaining the seed value from the vehicle. Further, since the seed value need not be kept within a system implementing the method of the invention, no corresponding storage or management components and resources dedicated to the seed value are required.

In preferred embodiments of the invention, each identifier and each obfuscated identifier may comprise a number of bits greater than or equal to 11, greater than or equal to 29, more preferably greater than or equal to 32.

A further aspect of the invention relates to a system suitable for implementing any of the embodiments of the method of the invention described above, in particular, to a system for obfuscating frames transmitted in a control area network of a vehicle, wherein each frame comprises at least one identifier for characterising a priority of the frame. The system may comprise a seed module configured for generating a seed value and a first obfuscation module. The first obfuscation module may be configured for obtaining a first ordered set of identifiers of frames usable in the CAN, for randomly generating a second ordered set of obfuscated identifiers using the seed value, wherein the total number of obfuscated identifiers in the second ordered set corresponds to the total number of identifiers in the first ordered set, and for associating each obfuscated identifier of the second ordered set with an identifier of the first ordered set, wherein an ordering of the obfuscated identifiers of the second ordered set corresponds to an ordering of the identifiers of the first ordered set.

In preferred embodiments of the invention, the seed module may be configured for generating a random seed value, and/or for generating the seed value by obtaining a reference seed value stored in the vehicle or in an external component.

According to preferred embodiments of the invention, the seed module may be configured for generating a seed value comprising at least 64 bits, preferably at least 128 bits, more preferably at least 256 bits.

In other preferred embodiments, the system may be connectable to storage means, and the system may be further configured for saving the seed value into the storage means.

According to preferred embodiments of the invention, each identifier and each obfuscated identifier may comprise a number of bits N, and the system may further be configured for increasing the number of bits N if a difference between $2^N$ and the number of identifiers in the first ordered set is smaller than a first predefined threshold.

In preferred embodiments of the invention, the system may further comprise a second obfuscation module configured for generating a random permutation of bits or groups of bits of a data part of at least one of said frames using the seed value. The data part contains information encoded in said bits or groups of bits readable by a component of the vehicle connected to the CAN.

According to preferred embodiments of the invention, the second obfuscation module may be configured for generating the random permutation of bits or groups of bits of said data parts using said seed value and the obfuscated identifier of said at least one frame.

The aforesaid bits or groups of bits may comprise a number of bits M. In preferred embodiments of the invention, the second obfuscation module may be further configured for increasing the number of bits or groups of bits by adding further bits or groups of bits to said at least one frame if said number M is smaller than a second predefined threshold.

According to preferred embodiments of the invention, the seed module, the first obfuscation module, and/or the second obfuscation module may be configured for erasing the seed value after using the seed value.

The system of the invention may be comprised in an apparatus installed within the vehicle and connected to the CAN thereof.

In preferred embodiments of the invention, the system may be configured for repeatedly operating the seed module for generating the seed value; operating the first obfuscation module for obtaining the first ordered set, randomly generating the second ordered set, and associating each obfuscated identifier with an identifier; and/or operating the second obfuscation module for generating the random permutation of bits or groups of bits of said data part in specified time periods. This has the advantage that a successful unauthorised access to the CAN can be limited in time.

In preferred embodiments of the invention, the specified time periods may be randomly generated.

The system may further comprise a processing unit configured for adapting control units connected to the CAN of the vehicle so that said control units can identify the obfuscated identifiers and/or the randomly permuted data parts.

The processing unit may further be configured for identifying an added control unit incorporated into the CAN of the vehicle, and for adapting said added control unit so that the added control unit can identify frames containing a new corresponding obfuscated identifier and/or a new corresponding randomly permuted data parts if said added control unit corresponds to an authorised control unit. In that way, authorised replacement devices can be installed in the vehicle and effectively connected with the CAN thereof.

The beginning of a new one of the aforementioned specified time periods may be further used by the processing unit for communicating the CAN profile to a newly added control unit, i.e. the obfuscated identifiers of other control units, and for integrating the newly added control unit into the CAN profile by obfuscating the identifiers and/or data parts of its corresponding frames as explained above.

The system of the invention may also be comprised in an apparatus external to the vehicle and configured for being removably connected to the CAN thereof.

A further aspect of the invention refers to a storage device containing a program code which, when executed by a processor, performs the method according to any of the embodiments of the invention previously disclosed.

BRIEF DESCRIPTION OF THE DRAWINGS

Fig. 1     illustrates the basic structure of a frame.

Fig. 2     illustrates the basic structure of the frame of Fig. 1 after carrying out a method according to embodiments of the invention.

Fig. 3     is a flow diagram representing a method according to embodiments of the invention.

Fig. 4     illustrates the method step of associating obfuscated identifiers to identifiers according to embodiments of the invention.

Fig. 5     is a flow diagram representing a method according to another embodiment of the invention.

Fig. 6     shows a system according to an embodiment of the invention.

Fig. 7     shows a system according to another embodiment of the invention.

DESCRIPTION OF PREFERRED EMBODIMENTS OF THE INVENTION

Certain embodiments of the present invention are described in detail herein below with reference to the accompanying drawings, wherein the features of the embodiments can be freely combined with each other unless otherwise described. However, it is to be expressly understood that the description of certain embodiments is given by way of example only, and that it should not be understood to limit the invention.

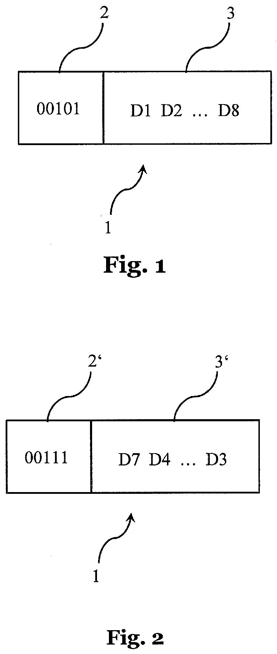

Fig. 1 illustrates the basic structure of a frame 1, which comprises at least an identifier 2 and may further comprise a data part 3. The identifier 2 characterises a control unit of destination in a control area network of a vehicle for the frame 1, i.e. a control unit at which the frame 1 is aimed and determines a priority of the frame 1. A control unit connected to the CAN can determine whether a received frame is aimed at it or not by means of the identifier 2.

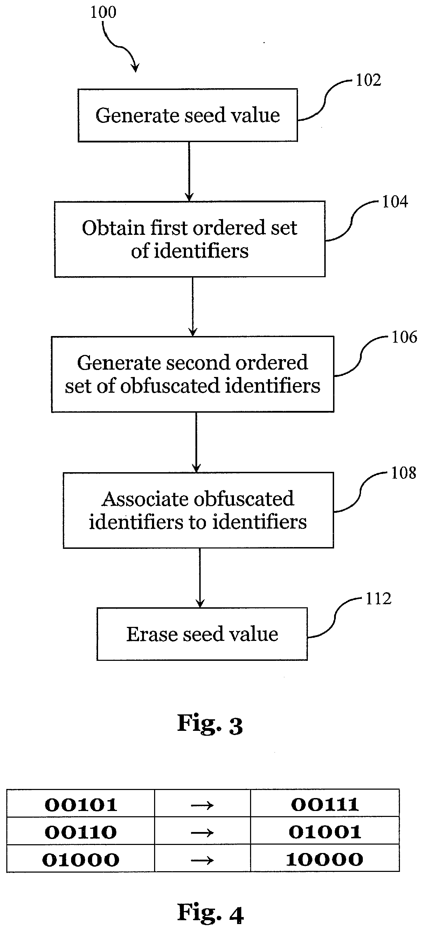

Fig. 2 illustrates the structure of the frame 1 shown in Fig. 1 after applying to it a method for obfuscating frames according to embodiments of the present invention. Fig. 2 will be referred to below with respect to figs. 3 to 5 for the purpose of better illustrating the invention.

Fig. 3 shows a flow diagram representing a method 100 for obfuscating frames in a control area network of a vehicle, like the frame 1 shown in Fig. 1, according to an embodiment of the invention. The method 100 comprises a step 102 of generating a seed value. The seed value may be generated as a random seed value, for example using a random number generating algorithm, as a reference value stored in the vehicle, for example a numerical value printed by the car manufacturer in a label located in a secure location of the vehicle, or as a combination of both. In the example under consideration, the seed value comprises 256 bits.

In a subsequent method step 104, a first ordered set of identifiers of frames usable in the CAN is obtained. Thus, for a number of frames similar to the frame 1 shown in Fig. 1, which may include all frames usable in the CAN or only a part thereof, the corresponding identifiers 2 are obtained and listed.

In a subsequent method step 106, the seed value generated in method step 102 is used for randomly generating a second ordered set of obfuscated identifiers having as many obfuscated identifiers as identifiers the first ordered set has.

In a subsequent method step 108, each obfuscated identifier of the second ordered set is associated with an identifier of the first ordered set, wherein an ordering of the obfuscated identifiers of the second ordered set corresponds to an ordering of the identifiers of the first ordered set.

Fig. 4 illustrates in an exemplary manner the method steps 104 to 108. The leftmost column contains three different identifiers 00101, 00110, and 01000, corresponding to three different frames, respectively. Note that although reference is made herein to a set of only three identifiers and corresponding frames, the illustrated principles apply analogously to an arbitrary number of identifiers and corresponding frames and that the invention may be applied in practice to a large number of frames. In the example shown in Fig. 4, each identifier comprises five bits, so that the identifiers may represent $2^5 = 32$ different numerical values, e.g. numerical values ranging between 0 and 31. In reality, however, each identifier and each obfuscated identifier may comprise a number of bits greater than or equal to 11, preferably greater than or equal to 29, more preferably greater than or equal to 32 and may represent correspondingly many different values.

Each of the three identifiers shown in the leftmost column of the table of Fig. 4 may correspond to a different functionality of a vehicle and may have a different priority. In the example shown, the identifier 00101 may correspond to a frame containing an instruction aimed at a braking subsystem, the identifier 00110 may correspond to a frame containing an instruction aimed at a lighting subsystem, and the identifier 01000 may correspond to a frame containing an instruction aimed at a display subsystem of the vehicle. The priority of each of the frames is determined by the corresponding identifier, wherein a higher priority is represented by a lower numerical value. Thus, the identifier 00101 has a higher priority than the identifier 00110, and the identifier 00110 has a higher priority than the identifier 01000.

In method step 104, the three identifiers shown in the leftmost column of the table of Fig. 4 are obtained. In the exemplary case at hand, only three possible different identifiers are obtained as a first ordered set of identifiers, 00101, 00110, and 01000 shown in the leftmost column of the table of Fig. 4. However, a large number of identifiers may be obtained in practice.

In method step 106, a second ordered set of obfuscated identifiers is generated using the seed value generated in method step 102 using a deterministic random number generating algorithm. This means that if the seed value used for generating the three particular obfuscated identifiers shown in the rightmost column of the table of Fig. 4 is used again, the same three obfuscated identifiers will be generated by the algorithm. The second ordered set of obfuscated identifiers comprises the obfuscated identifiers 00111, 01001, and 10000 and has a total number of obfuscated identifiers that corresponds to the total number of identifiers in the first ordered set of identifiers, three in the example at hand.

Each of the obfuscated identifiers of the second ordered set is as associated in method step 108 to a corresponding identifier of the first ordered set in such a manner that an ordering of the obfuscated identifiers of the second ordered set corresponds to an ordering of the identifiers of the first ordered set. In the case at hand, the obfuscated identifiers 00111, 01001, and 10000 are associated with the identifiers 00101, 00110, and 01000, respectively, such that the ordering of the identifiers of the first ordered set 00101 < 00110 < 01000 is reproduced by the corresponding obfuscated identifiers of the second ordered set 00111 < 01001 < 10000. Note that while generating of obfuscated identifiers and the association with the original identifiers is described as two steps here, it is understood that these two steps may be part of a same mathematical operation, which transforms one (i.e. first) ordered set of obfuscated identifiers into another (i.e. second) ordered set of identifiers while preserving the order.

For the sake of understanding, it should be noted that the obfuscated identifiers of the second ordered set may take any numerical values as long as the ordering of the identifiers of the first ordered set is maintained. This means, for instance, that there exist as many different combinations of three obfuscated identifiers comprising the particular first and third obfuscated identifiers shown in the rightmost column of the table of Fig. 4 as different numerical values the second obfuscated identifier may take between the value of the first obfuscated identifier 00111 and the value of the third obfuscated identifier 10000. Thus, the second obfuscated identifier could also take any of the values 01100, 01001, or 01111, but may not take the value 00100 or 00010, which would be lower than the value 00111 of the first obfuscated identifier, and may not take the value 11000 or 11111, which would be higher than the value 10000 of the third obfuscated identifier.

The process of associating each obfuscated identifier of the second ordered set with an identifier of the first ordered set comprises configuring the respective control units accordingly. For example, the control unit at which the identifier 00101 was aimed, is adapted for identifying the obfuscated identifier 00111, which "replaces" the identifier 00101, as indicative of a frame that is aimed at it and should hence be received and read.

If each obfuscated identifier comprises N bits, the obfuscated identifiers may take $2^N$ different values. Then, if the first ordered set of obfuscated identifiers comprises a number k of identifiers, there are $\binom{N}{k} = \frac{N!}{k!(N-k)!}$ possible ways of randomly generating a second ordered set of k obfuscated identifiers using the N bits available that respect the ordering of the first ordered set. Thus, for example, if each identifier and each obfuscated identifier comprises 5 bits, as is the case in Fig. 4, and assuming that there are 31 different frames usable in the CAN and that the method is applied to all of them, the first ordered set of identifiers would comprise 31 identifiers and there are only $\binom{32}{31} = 32$ different ways of generating the second ordered set. The level of randomisation may then not be enough to guarantee security of the obfuscated communications. For that reason, the method may comprise increasing the number of bits N if a difference between $2^N$ and the number k of identifiers in the first ordered set is smaller than a first predefined threshold. Upon increasing the number of bits N, for example from 5 to 10, the aforementioned situation would change from 32 different possible ways of generating the second ordered set to $\binom{1024}{31}$, and hence larger than $10^{61}$.

In the embodiment shown in Fig. 3, the method further comprises a step 112 of erasing the seed value after using it in method step 106 for generating the second ordered set of obfuscated identifiers.

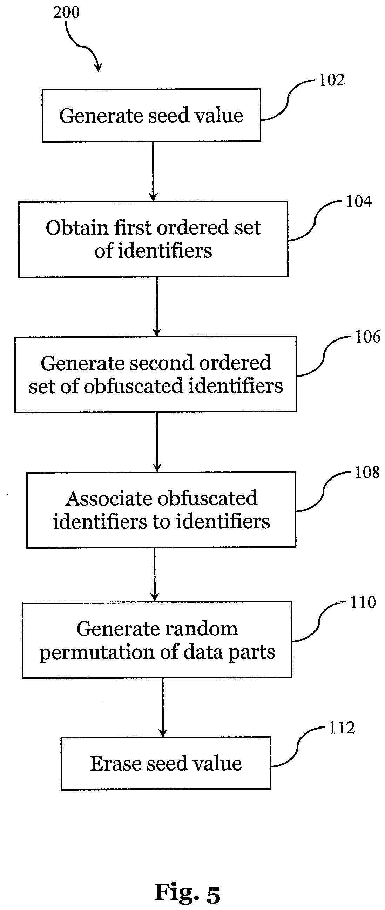

Fig. 5 shows a flow diagram illustrating a method 200 according to another embodiment of the invention which also comprises method steps 102 to 108 and 112 described with respect to Fig. 4, which are not described again for brevity. Further, the method of Fig. 5 comprises a method step 110 of generating a random permutation of bytes of the data parts of the frames to which the foregoing method steps are applied, i.e. of the frames with identifiers which were included in the first ordered set, using the seed value and the corresponding obfuscated identifier. With reference to the frame 1 shown in Fig. 1, the data part 3 thereof comprises eight groups of bits comprising eight bits each, i.e. eight bytes D1 to D8. The data part 3 of the frame 1 encodes information readable by the control unit of the vehicle at which the frame 1 is aimed, which was characterised by the corresponding identifier 2 and is now characterised by the obfuscated identifier 2'.

In the course of method step 110, a random permutation of the groups of bits D1 to D8 of the data part 3 of the frame 1 is generated using the seed value generated in the method step 102 and the obfuscated identifier 2', so that the bytes D1, D2,..., D8 in the data part 3 are randomly permuted into a permutation D7, D4,..., D3 that can be reproduced if necessary by using the same seed value and the identifier 2'. The control unit at which the frame 1 is aimed is adapted to identify the identifier 2', i.e. 00111, as indicative of the frame aimed at it and is further configured to know in which order to process the bytes D7, D4, ... , D3 of the permuted data part 3'.

In the example at hand, the data part 3 of the frame 1 comprises eight bytes D1 to D8 that may be permuted in 8! different manners. In order to increase the degree of randomisation and hence the level of security of the obfuscation, the number of bytes involved in the permutation may be increased by adding further bytes, i.e. additional dummy bytes, if the number of bytes is smaller than a predefined threshold. For instance, if a number P of dummy bytes is added in the case at hand, the number of possible permutations increases from 8! to (8+P)!, which can considerably increase the difficulty of gaining unauthorised access to the information encoded in the data part 3' of frame 1. The control unit at which the frame 1 is aimed is adapted for reading the permuted data part 3' properly, i.e. knows in which order to process the received bytes, extracting the information encoded in the permuted data part 3' and ignoring the additionally inserted dummy bytes as if the data part 3' had not been permuted.

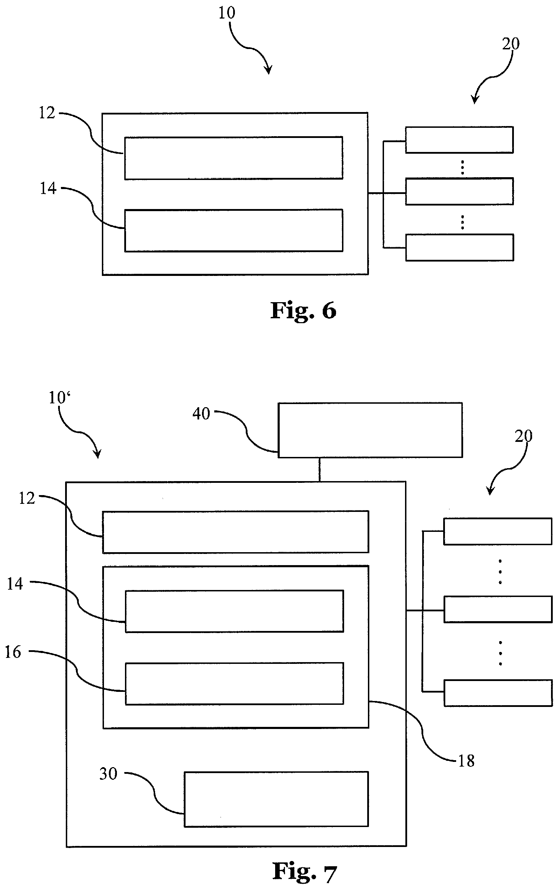

Fig. 6 shows a system 10 for obfuscating frames transmitted in a control area network of a vehicle according to an embodiment of the present invention. The system 10 is configured for implementing the method of any of the embodiments of the invention disclosed above. The system 10 comprises a seed module 12 configured for generating the seed value as a random seed value and a first obfuscation module 14 configured for obtaining the first ordered set of identifiers, randomly generating the second ordered set of obfuscated identifiers, and associating each obfuscated identifier of the second ordered set with an identifier of the first ordered set. The system 10 shown in Fig. 6 is a device external to the vehicle configured for being removably connected to the CAN of the vehicle in order to interact with the control units 20 of the vehicle. The system 10 may be connected to the CAN of the vehicle by means of a physical connection port and/or by means of a wireless connection.

Fig. 7 shows a system 10' according to another embodiment of the invention that also comprises a seed module 12 and a first obfuscation module 14 analogous to those of the system 10 described with respect to Fig. 6. The system 10' is a device integrated within the vehicle and connected to the CAN and the control units 20 of the vehicle. The seed module 12 of the system 10' is configured for generating the seed value by obtaining a reference seed value stored in the vehicle, for example by receiving an inputted reference seed value inputted by a human operator having physical access to the vehicle.

The system 10' further comprises a second obfuscation module 16 configured for generating a random permutation of bits or groups of bits of a data part of at least one frame as explained for the methods described above. In the example shown, the first obfuscation module 14 and the second obfuscation module 16 are included in a single integrated obfuscation module 18.

The system 10' is configured for repeatedly operating the seed module 12, the first obfuscation module 14, and the second obfuscation module 16 so as to repeatedly carry out the actions corresponding to method steps 102 to 112 in randomly generated time periods and further comprises a processing unit 30 configured for adapting the control units 20 in each of the aforesaid time periods so that the control units 20 are updated so that they can, after each repetition of method steps 102 to 112, identify newly generated obfuscated identifiers and decode newly randomly permuted data parts of the frames.

Further, the system 10' is connectable to an external storage means 40 and configured for saving the seed value into the storage means 40 before erasing the seed value from the system 10'.

The processing unit 30 of the system 10' is configured for identifying, when a new control unit is installed into the vehicle and connected to the CAN, whether the newly installed control unit is authorised to access the CAN and, if that is the case, for adapting the newly installed control unit to the existing CAN profile, i.e. to operate with the obfuscated identifiers and the corresponding permutations of data parts.

It is to be understood that what is described above is what is presently considered the preferred embodiment of the present invention. However, it should be noted that the description of the preferred embodiments is given by way of example only and that various modifications may be made without departing from the scope of the invention as defined in the claims.

LIST OF REFERENCE SIGNS

| 1 | frame |
|---|---|
| 2 | identifier |
| 2' | obfuscated identifier |
| 3 | data part |
| 3' | permuted data part |
| 10, 10' | frame obfuscation system |
| 12 | seed module |
| 14 | first obfuscation module |
| 16 | second obfuscation module |
| 18 | integrated obfuscation module |
| 20 | control units |
| 30 | processing unit |
| 40 | storage means |
| 100, 200 | method |
| 102 - 112 | method steps |

**Claims**

1. A method for obfuscating frames in a control area network, CAN, of a vehicle, wherein each frame comprises at least one identifier for characterising a priority of the frame, wherein the method comprises:

generating a seed value;
obtaining a first ordered set of identifiers of frames usable in the CAN;
randomly generating a second ordered set of obfuscated identifiers using the seed value, wherein the total number of obfuscated identifiers in the second ordered set corresponds to the total number of identifiers in the first ordered set;
associating each obfuscated identifier of the second ordered set with an identifier of the first ordered set, wherein an ordering of the obfuscated identifiers of the second ordered set corresponds to an ordering of the identifiers of the first ordered set.

2. The method of claim 1, wherein generating the seed value comprises generating a random seed value, and/or wherein generating the seed value comprises obtaining a reference seed value stored in the vehicle or in an external component.

3. The method of claim 1 or 2, wherein the seed value comprises at least 64 bits, preferably at least 128 bits, more preferably at least 256 bits; and/or wherein each identifier and/or each obfuscated identifier comprises a number of bits greater than or equal to 11, preferably greater than or equal to 29, more preferably greater than or equal to 32; and/or wherein each obfuscated identifier comprises a number of bits N, wherein the method further comprises:
increasing the number of bits N if a difference between $2^N$ and the number of identifiers in the first ordered set is smaller than a first predefined threshold.

4. The method of one of the preceding claims, wherein the method further comprises:

generating a random permutation of bits or groups of bits of a data part of at least one of said frames using the seed value , wherein the data part contains information encoded in said bits or groups of bits readable by a component of the vehicle connected to the CAN;
wherein the random permutation of bits or groups of bits of said data parts is preferably generated using the seed value and the obfuscated identifier of said at least one frame.

5. The method of claim 4, wherein said bits or groups of bits comprise a number of bits M, and wherein the method further comprises:
increasing the number of bits or groups of bits by adding further bits or groups of bits to said at least one frame if said number M is smaller than a second predefined threshold.

6. The method of one of the preceding claims, further comprising saving the seed value into a storage means and/or erasing the seed value after using the seed value.

7. A system (10) for obfuscating frames transmitted in a control area network, CAN, of a vehicle, wherein each frame comprises at least one identifier for characterising a priority of the frame, wherein the system comprises:

a seed module (12) configured for generating a seed value;
a first obfuscation module (14) configured for:

obtaining a first ordered set of identifiers of frames usable in the CAN;
randomly generating a second ordered set of obfuscated identifiers using the seed value, wherein the total number of obfuscated identifiers in the second ordered set corresponds to the total number of identifiers in the first ordered set;
associating each obfuscated identifier of the second ordered set with an identifier of the first ordered set, wherein an ordering of the obfuscated identifiers of the second ordered set corresponds to an ordering of the identifiers of the first ordered set.

8. The system of claim 7, wherein the seed module (12) is configured for generating a random seed value, and/or for generating the seed value by obtaining a reference seed value stored in the vehicle or in an external component.

9. The system of one of claims 7 to 8, wherein the seed module (12) is configured for generating a seed value comprising at least 64 bits, preferably at least 128 bits, more preferably at least 256 bits; and/or wherein each obfuscated identifier comprises a number of bits N, wherein the system (10) is further configured for:
increasing the number of bits N if a difference between $2^N$ and the number of identifiers in the first ordered set is smaller than a first predefined threshold.

10. The system of one of claims 7 to 9, wherein the system further comprises a second obfuscation module (16) configured for:

generating a random permutation of bits or groups of bits of a data part of at least one of said frames using the seed value, wherein the data part contains information encoded in said bits or groups of bits readable by a component of the vehicle connected to the CAN;
wherein the system is preferably configured for generating the random permutation of bits or groups of bits of said data parts using the seed value and the obfuscated identifier of said at least one frame.

11. The system of claim 10, wherein said bits or groups of bits comprise a number of bits M, and wherein the second obfuscation module (16) is further configured for:

increasing the number of bits or groups of bits by adding further bits or groups of bits to said at least one frame if said number M is smaller than a second predefined threshold.

12. The system of one of claims 7 to 11, wherein the system is connectable to a storage means (40), and wherein the system is further configured for saving the seed value into the storage means (40); and/or wherein the seed module (12), the first obfuscation module (14), and/or the second obfuscation module (16) are configured for erasing the seed value after using the seed value.

13. The system of one of claims 7 to 12, further configured for repeatedly: operating the seed module (12) for generating the seed value;
operating the first obfuscation module (14) for obtaining the first ordered set, randomly generating the second ordered set, and associating each obfuscated identifier with an identifier; and/or
operating the second obfuscation module (16) for generating the random permutation of bits or groups of bits of said data part
in specified time periods;
wherein the specified time periods are preferably randomly generated.

14. The system of one of claims 7 to 13, further comprising a processing unit (30) configured for adapting control units (20) connected to the CAN of the vehicle so that said control units (20) can identify the obfuscated identifiers and/or the randomly permuted data parts.

15. A digital storage device containing a program code which, when executed by a processor, performs the method of any of claims 1 to 6.

2    3

00101    D1 D2 ... D8

1

**Fig. 1**

2'    3'

00111    D7 D4 ... D3

1

**Fig. 2**

100

102

Generate seed value

104

Obtain first ordered set of identifiers

106

Generate second ordered set of obfuscated identifiers

108

Associate obfuscated identifiers to identifiers

112

Erase seed value

**Fig. 3**

| 00101 | → | 00111 |
|---|---|---|
| 00110 | → | 01001 |
| 01000 | → | 10000 |

**Fig. 4**

200

```
┌─────────────────────────────┐
│     Generate seed value     │ ─── 102
└─────────────────────────────┘
              │
              ▼
┌─────────────────────────────┐
│     Obtain first ordered set│ ─── 104
│        of identifiers       │
└─────────────────────────────┘
              │
              ▼
┌─────────────────────────────┐
│     Generate second ordered │ ─── 106
│   set of obfuscated identifiers│
└─────────────────────────────┘
              │
              ▼
┌─────────────────────────────┐
│     Associate obfuscated    │ ─── 108
│    identifiers to identifiers│
└─────────────────────────────┘
              │
              ▼
┌─────────────────────────────┐
│     Generate random         │ ─── 110
│   permutation of data parts │
└─────────────────────────────┘
              │
              ▼
┌─────────────────────────────┐
│       Erase seed value      │ ─── 112
└─────────────────────────────┘
```

**Fig. 5**

**Fig. 6**

**Fig. 7**

Europäisches
Patentamt

European
Patent Office

Office européen
des brevets

# EUROPEAN SEARCH REPORT

Application Number

EP 18 17 8073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/048058 A1 (UNIV MICHIGAN [US]) 2 April 2015 (2015-04-02) | 1-3,6-9, 12-15 | INV. H04L12/40 |
| Y | * paragraphs [0072], [0073], [0077], [0081] - [0083]; figure 9 * | 4,5,10, 11 | |
| X | MARTIN LUKASIEWYCZ ET AL: "Security-Aware Obfuscated Priority Assignment for Automotive CAN Platforms", ACM TRANSACTIONS ON DESIGN AUTOMATION OF ELECTRONIC SYSTEMS, ACM, NEW YORK, NY, US, vol. 21, no. 2, 28 January 2016 (2016-01-28), pages 1-27, XP058077793, ISSN: 1084-4309, DOI: 10.1145/2831232 | 1-3,6-9, 12-15 | |
| Y | * sections 2.2 and 5; figure 9 * | 4,5,10, 11 | |
| Y | US 2015/033016 A1 (THORNTON DOUGLAS A [US] ET AL) 29 January 2015 (2015-01-29) * paragraph [0150] * | 4,5,10, 11 | |

TECHNICAL FIELDS
SEARCHED      (IPC)

H04L

The present search report has been drawn up for all claims

| Place of search | Date of completion of the search | Examiner |
|---|---|---|
| Munich | 5 December 2018 | Billet, Olivier |

EPO FORM 1503 03.82 (P04C01)

## ANNEX TO THE EUROPEAN SEARCH REPORT
## ON EUROPEAN PATENT APPLICATION NO.

EP 18 17 8073

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2018

| Patent document cited in search report | | Publication date | Patent family member(s) | | Publication date |
|---|---|---|---|---|---|
| WO 2015048058 | A1 | 02-04-2015 | CN | 105745862 A | 06-07-2016 |
| | | | EP | 3050251 A1 | 03-08-2016 |
| | | | KR | 20160060683 A | 30-05-2016 |
| | | | US | 2015089236 A1 | 26-03-2015 |
| | | | WO | 2015048058 A1 | 02-04-2015 |
| US 2015033016 | A1 | 29-01-2015 | US | 2015033016 A1 | 29-01-2015 |
| | | | WO | 2015013440 A1 | 29-01-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011016106 A1

- WO 2017064001 A1